# EUROPEAN PATENT APPLICATION

(11) **EP 2 631 789 A1**
(43) Date of publication of application: **28.08.2013**
(21) Application number: 13155623.5
(22) Date of filing: 18.02.2013
(51) Int. Cl.: G06F 9/44, G06F 3/0481

(54) **Apparatus and method for grouping application program folders in electronic device**

(30) Priority: 21.02.2012 KR 20120017418
(71) Applicant: Samsung Electronics Co., Ltd, Gyeonggi-do 443-742 (KR)
(72) Inventor: Park, Hye-Sun, Seoul (KR); Kim, Sung-Chul, Seoul (KR); Park, Kee-Hyuk, Gyeonggi-do (KR); Lee, Jae-Min, Gyeonggi-do, (KR); Jeong, Hak-Hyeon, Seoul (KR)
(74) Representative: Gover, Richard Paul

(57) **Abstract**

An apparatus and method for grouping application program folders in an electronic device is provided. A first folder grouping type is initially determined. Application programs are grouped within at least one first application program folder according to the first folder grouping type, and the at least one first folder is displayed. In response to the detection of a folder type change event, a second folder grouping type is determined. Application programs are grouped and displayed within at least one second folder according to the second folder grouping type.

## Description

### BACKGROUND

### 1. Technical Field

The present disclosure relates generally to information display management in portable electronic devices, and more particularly, to grouping application program folders in an electronic device.

### 2. Description of the Related Art

Portable electronic devices have evolved into multimedia communication devices which provide a data transmission service and various additional services as well as a voice communication service. A typical portable electronic device provides multimedia services such as a music reproduction service, a message service, a camera service, and a video reproduction service in addition to the voice communication service.

In addition, state of the art portable electronic devices provide a function for installing and executing application programs ("apps") of various types in accordance with a user's needs. As the number of downloadable apps has proliferated, a typical device may have hundreds of apps installed therein at any given time. Thus, techniques for organizing and managing the numerous apps have been developed. For example, devices allow a user to manage apps in folders, where each folder displays small thumbnails of apps organized by the user. As several folders can be displayed concurrently on a display screen, the user is able to scroll through the folders to locate an app of his or her choice.

Nevertheless, a need exists to reduce the amount of time a user spends in navigating through lists and menus of apps, especially for devices in which a multiplicity of apps have been installed.

### SUMMARY

An aspect of the present disclosure is to provide an apparatus and method for grouping application program folders.

Another aspect of the present disclosure is to provide an apparatus and method for dynamically changing a type of grouping of application program folders in an electronic device.

In accordance with an aspect, a method of grouping application program folders in an electronic device is provided. A first folder grouping type is initially determined. Application programs are grouped within at least one first application program folder according to the first folder grouping type, and the at least one first folder is displayed. In response to the detection of a folder type change event, a second folder grouping type is determined. Application programs are grouped and displayed within at least one second folder according to the second folder grouping type.

Examples of folder grouping types include: application program categories; usage dates or times; usage frequency; cumulative execution time; and usage places.

A folder group changing event may a user input command, or a user-independent event such as the occurrence of a particular time of day, or a change in the device's location.

In another aspect, an electronic device comprises: a display unit that displays application program folders; a storage unit that stores an application program usage database; and a controller configured to group application programs within at least one first application program folder according to a first folder grouping type, cause the at least one first folder to be displayed on the display unit, and, responsive to detection of a folder type change event, group application programs within at least one second application program folder according to a second folder grouping type and cause the display unit to display the at least one second folder.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a block diagram illustrating configuration of an electronic device according to one embodiment of the present invention;
FIGs. 2A to 2D are screen examples illustrating a process of grouping application program folders according to one embodiment of the present invention;
FIG. 3 is a flowchart illustrating a process of changing a grouping type of application program folders in an electronic device according to one embodiment of the present invention;
FIG. 4 is a flowchart illustrating a process of changing a grouping type of application program folders in an electronic device according to another embodiment of the present invention; and
FIG. 5 is a flowchart illustrating a process of changing a grouping type of application program folders in an electronic device according to another embodiment of the present invention.

### DETAILED DESCRIPTION OF EXEMPLARY EMBODIMENTS

Exemplary embodiments of the present invention will be described herein below with reference to the accompanying drawings. In the following description, well-known functions or constructions are not described in detail since they would obscure the invention in unnecessary detail.

Hereinafter, a description will be given for an apparatus and method for dynamically changing a type of grouping ("a grouping type") of application program folders in an electronic device. Herein, an application program folder (also called "application folder" or just "folder") indicates a group of application programs installed in an electronic device and organized in the folder. The phrase "application program" will be referred to herein interchangeably as just "application" or "app". Herein, "grouping of application folders" and like semantics refers to organizing of one or more individual applications within a folder. Grouping of application folders can also refer to organizing a display of related folders concurrently on a screen in a determined relationship. Application folders can be grouped in different ways in accordance with the invention, thus establishing different grouping types. A display on a current screen of folders of a first grouping type is dynamically changed to a display of folders of a different grouping type in accordance with embodiments described below.

Hereinafter, the electronic device may be any one of a Personal Digital Assistant (PDA), a laptop computer, a desktop computer, a smart phone, a netbook, a Mobile Internet Device (MID), a Ultra Mobile Personal Computer (UMPC), a tablet PC, a navigation device, a Moving Picture Experts Group (MPEG) layer 3 (MP3) player, a smart TV, etc., which may display an application program list or an arrangement of icons representing applications.

Hereinafter, examples will be given of group types for which the electronic device may group applications and application folders. As explained further below, group type examples include but are not limited to: genre, selected by the user or determined automatically; usage dates or times; usage frequency; cumulative execution time; and usage places. It is understood that other types of grouping are also contemplated within the scope of the invention.

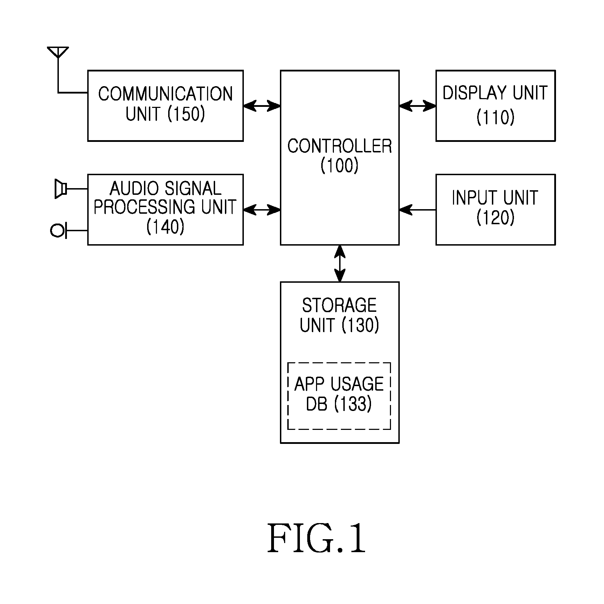

FIG. 1 is a block diagram illustrating a functional configuration of an electronic device according to one embodiment of the present invention.

Hereinafter, it is assumed that the example electronic device includes a communication unit for transmitting and receiving signals.

As shown in FIG. 1, the electronic device includes a controller 100, a display unit 110, an input unit 120, a storage unit 130, an audio processing unit 140, and a communication unit 150. Storage unit 130 includes an application usage database 133.

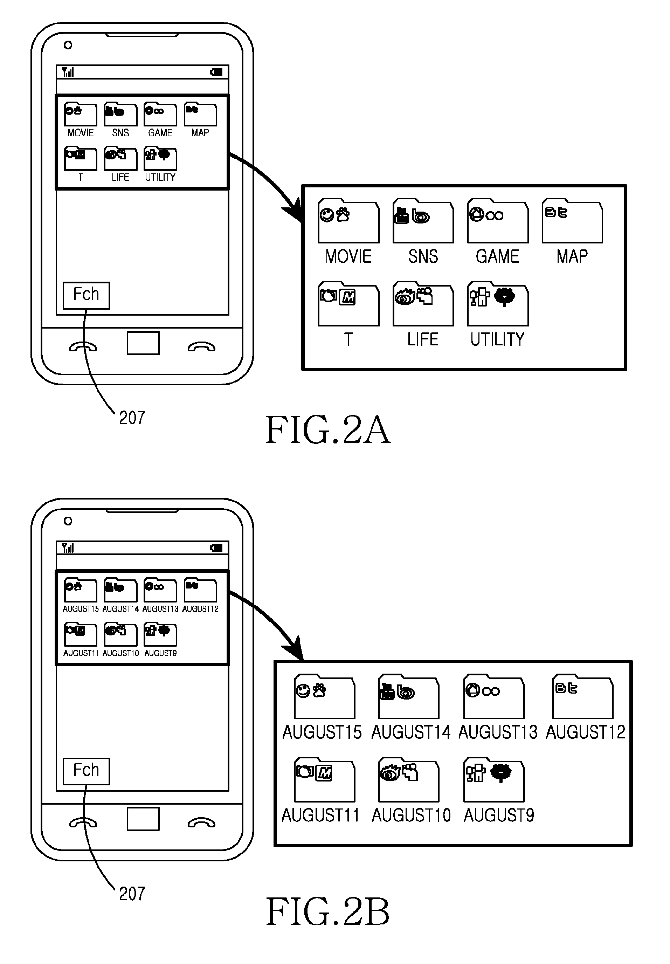

The controller 100 is comprised of at least one processor, and controls an overall operation of the electronic device. Additionally, controller 100 groups application program folders, in accordance with embodiments of the invention, i.e., by organizing applications in groups for inclusion within different folders. Examples of such folder grouping are illustrated in the screens of FIGS. 2A to 2D. As illustrated, each folder may be displayed in the shape of a file folder or the like, with small thumbnails (icons) representing the respective applications included within that folder. A text or image label may be displayed in proximity to the folder to indicate its contents. For example, the controller 100 can group, as shown in FIG. 2A, the application program folders according to category setting information. The categories may be set manually by the user in a settings menu or the like, or set automatically by the controller 100 in accordance with metadata stored with each application. In the case of manual setting, the system may also permit the user to select the particular applications to be included within each categorized folder. Applications can be organized in categories such as movie apps, SNS, games, maps, travel, life, utility, etc. Several folders may be displayed on a screen concurrently, as in the illustrated example. When a user selects a folder via touch input or the like, another display screen (not shown) is preferably generated which enlarges the icons for the individual apps of the folder, allowing the user to subsequently select any one of the apps for execution via touch input on the enlarged icon.

Referring to the screen example of FIG. 2B, application program folders can be grouped based on usage dates of application programs. Here, the controller 100 arranges the application program folders in consideration of usage dates of application programs included in each of the application program folders. For instance, any application that was executed (run) for more than a minimum period of time on August 15^{th} might be included in a folder labeled August 15. Folders so generated for each date can then be displayed sequentially on a single screen, in chronological order. In this manner, a user may readily identify which apps were run on a recent particular date. Also, with the folder grouping based on usage dates, the controller 100 may group the application program folders to include the same application program in a plurality of application program folders. Here, usage dates of application programs, which are criteria for grouping application program folders, may be predetermined or may be selected by the user.

Instead of or in addition to organizing folders based on usage dates, grouping criteria based on usage time of the application programs can be established. Usage time criteria may include at least one of time points when application programs are initially executed (i.e., launched), time points when the application programs are terminated, the cumulative execution time of the application program on a particular date or over a particular period of time, or time when the application programs are executed during a certain time period. Also, the time points when the application programs are executed may be classified based on any one of time, morning/afternoon, day (as illustrated in FIG. 2B), week, or month during which the applications have been executed.

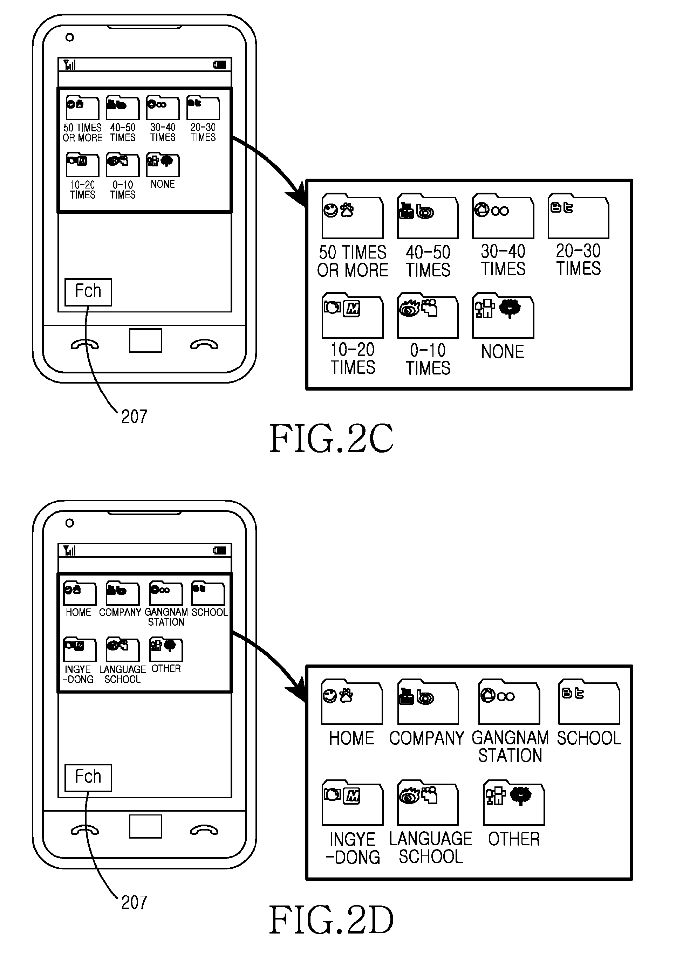

Referring to FIG. 2C, another example of folder grouping type is based on frequency of use, e.g., the number of times applications have been executed during a recent predetermined time interval. Such time interval may be predetermined or set by a user. Here, the controller 100 may group apps in folders, and arrange a display of folders in consideration of usage frequency of application programs included in each of the application program folders. For instance, applications that have been executed 50 or more times over the last X number of months are grouped within a folder labeled "50 times or more". Applications executed between 40-50 times over that same period are grouped in a folder labeled "40-50 times" which is displayed adjacent to the former folder; etc. In this manner, the user may quickly identify her most frequently executed apps, least frequently accessed apps, and so forth.

In yet another example, referring to FIG. 2D, the controller 100 can group application program folders based on usage places. The usage place grouping approach can allow a user to rapidly identify an app with a high probability of being useful in a certain geographical area. Here, the controller 100 may arrange application program folders automatically in consideration of a current position of the electronic device. That is, the current position of the electronic device may be detected by a GPS or other suitable means. An application folder most relevant to the current position can be organized and displayed in a prioritized manner with respect to folders associated with non-current positions. Also, the controller 100 may group application program folders to include the same application program in a plurality of application program folders.

When a folder grouping change event is generated, the controller 100 changes a grouping type of application program folders. For instance, when the folders are grouped in categories as shown in FIG. 2A, a folder grouping change event (hereafter, also called "change event") can cause the controller to generate and display any of the folder groups as shown in the examples of FIGS. 2B, 2C or 2D. One example of a change event is the detection of a user input command for a folder group change. In one embodiment, illustrated in FIGS. 2A - 2D, a folder change (Fch) icon 207 is displayed on the same screen ("waiting" or "home" screen) displaying currently grouped folders. When the user selects icon 207 via touch input or other selection means, the controller 100 detects this input as a folder change event and immediately changes the screen to display the folder groups of FIG. 2B, 2C or 2D according to a predetermined folder group type change sequence. When the icon is selected again, the next folder group type in the sequence is displayed.

As an alternative or in addition to a folder change icon 207, a hardware key could be pre-designated as a folder grouping change key. Here, the folder grouping change key could be a dedicated hardware button, or a button used for other functions such as a volume adjustment button or a home button. A scheme can be implemented in which a folder grouping change event is detected via the button used for other functions, but only when that button is manipulated in a predetermined manner (e.g., pressed a certain number of times in rapid succession; held down continuously for a predefined time, etc.).

In addition, the controller 100 may select different folder grouping types according to types of folder grouping change events and may change a grouping type of application program folders. For instance, in accordance with a settings menu, whenever the location of the electronic device changes beyond a preset geographical boundary, the controller 100 might change the folder grouping display automatically to that shown in FIG. 2D, with a folder for the new (current) geographic area displayed the most prominently, or in a location of the screen known to be designated as the location of the most relevant (highest probability of use) folder. This method could be used to enable the user to rapidly access applications most suitable for the new location. In other examples, a folder grouping as shown in FIG. 2B will automatically be reorganized at 12:00 midnight, i.e., as a new day begins. (When the screen of FIG. 2B is already displayed, this type of folder change event will maintain the type of folder groups displayed, but will generate new folders and a new screen display for the set of folders chronologically displayed.) For instance, when midnight strikes, the folder group display may automatically change to the screen from that of FIGS. 2A, 2C or 2D to the screen of FIG.2B temporarily, e.g., for a few seconds, and then revert back to the prior grouping type display. Similarly, as the frequency of app usage changes, the screen example of FIG. 2C can exhibit an automatic adjustment of the apps within the respective folders. In yet another example, time of day can be a folder grouping change event, whereby apps more suitable for morning, evening, etc., can be automatically grouped by the controller 100 and promptly displayed (thus constituting a folder group type display change).

The display unit 110 displays state information of the electronic device, characters input by the user, moving pictures, still pictures, etc. For example, the display unit 110 displays at least one application program folder grouped according to control of the controller 100. If a folder grouping change event is generated, the display unit 110 changes the display of the grouped folders according to control of the controller 100.

If the display unit 110 is equipped with a touch screen, the display unit 110 provides input information sensed through the touch screen to the controller 100.

The input unit 120 provides input data generated by selection of the user to the controller 100. Preferably, the input unit 120 includes a touch screen (considered part of the display unit). In other embodiments, the input unit 120 includes only control buttons (without a touch screen) for control of the electronic device. The input unit 120 may equipped with a keypad for receiving an input data from the user.

The storage unit 130 includes a program storage unit for storing a program for controlling an operation of the electronic device and a data storage unit for storing data generated while the program is performed. Storage unit 130 includes an application usage database 133 which stores application usage information as well as folder grouping type information in accordance with the invention. Such usage information may include, for each application stored within the electronic device, dates during which the application was executed; time points at which the application was launched and terminated during the individual dates; frequency of use, which may be measured as the cumulative number of times the application was launched over a recent predetermined time period, and/or the cumulative use time over a predetermined recent time period, etc.; as well as usage places at times during which the application was executed. Storage unit 130 may also store a first program for changing a grouping type of application program folders according to a folder grouping change event. In this case, the controller 100 executes the first program stored in the storage unit 130 and changes the grouping type of the application program folders to a different type selected according to the folder grouping change event.

The audio processing unit 140 controls input and output of an audio signal. For example, the audio processing unit 140 transmits an audio signal provided from the controller 100 to the outside through a speaker and provides an audio signal provided from a microphone to the controller 100. Whenever a folder group change occurs based on a change event, a predetermined audible sound may be output, apprising the user of the same.

The communication unit 150 processes signals transmitted and received through an antenna.

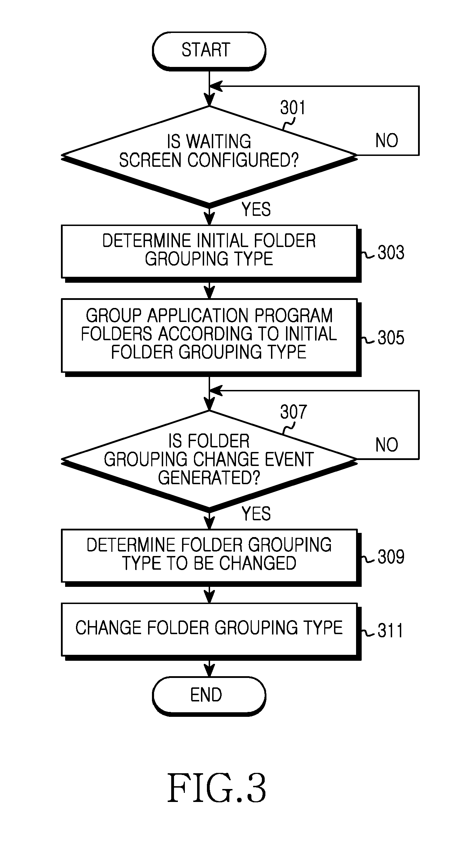

FIG. 3 is a flowchart illustrating a process of changing a grouping type of application program folders in an electronic device according to one embodiment of the present invention.

The electronic device determines whether to configure a waiting screen in step 301. Here, a waiting screen of the electronic device indicates a screen for displaying an application program list and/or application program folders. An example of a waiting screen is a home screen. Step 301 may thus be performed when the device is first turned on, when a command to display a home screen is received, or when a previously executed and displayed application is terminated.

When the waiting screen is configured, the electronic device proceeds to step 303 and determines an initial folder grouping type. In one example, the electronic device determines a predetermined (default) basic folder grouping type as the initial folder grouping type. Alternatively, the electronic device determines a folder grouping type used when configuring a previous waiting screen as the initial folder grouping type.

The electronic device next proceeds to step 305 and groups application program folders according to the initial folder grouping type. Examples of the initial folder grouping type can be any one of those group types illustrated in FIGS. 2A - 2D or discussed above.

Next, at step 307 it is determined whether a folder grouping change event is generated. Examples of folder group change events are those described above. These include, e.g., detection of an input command through folder group change key 207; detection of a new current location, detection of a particular time of day point, etc.

When the folder grouping change event is detected, a changed folder grouping type is determined in accordance with the change event at step 309, as described above. For instance, the folder grouping as shown in FIG. 2A can be changed to any of the screens of FIGS. 2B - 2D, according to a predetermined criteria. When the screen change event is a new current location, the screen may be automatically changed to that of FIG. 2D to reflect the new location.

Next, at step 311, the changed folder grouping type is displayed, and the process ends.

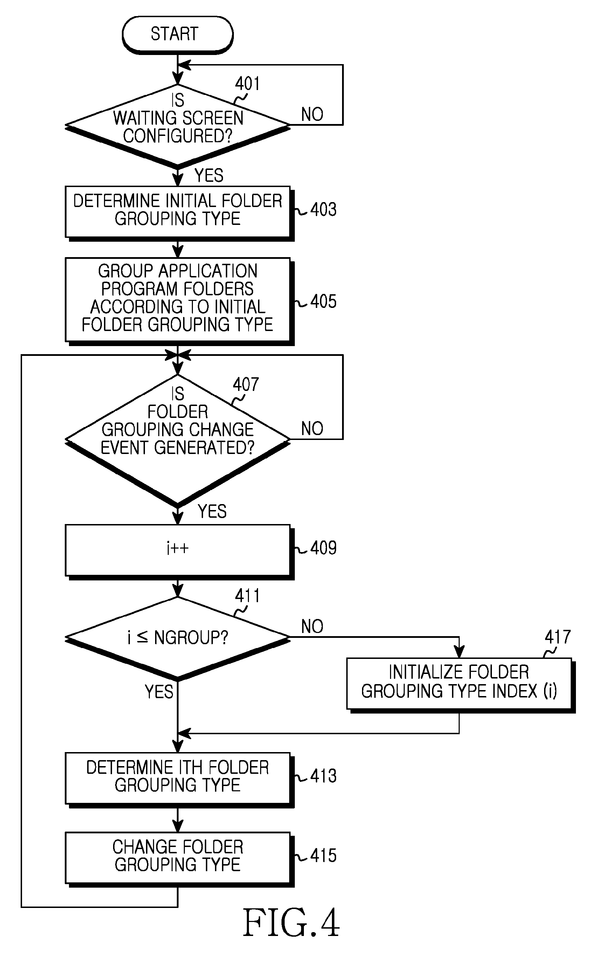

As described above, when the folder grouping change event is generated, the electronic device changes a grouping type of application program folders displayed on the display unit. Hereinafter, as shown in FIG. 4, an example is presented in which the electronic device may change the folder grouping type while circulating a plurality of folder grouping types according to the generation of the folder grouping change event. That is, the folder grouping type is changed in a predetermined sequence.

FIG. 4 is a flowchart illustrating a process of changing a grouping type of application program folders in an electronic device according to another embodiment of the present invention. This process establishes and implements a sequence in which a folder grouping type is changed in accordance with a folder grouping type change event.

In this embodiment, steps 401, 403, 405 and 407 are the same as the FIG. 3 steps 301, 303, 305 and 307, respectively (discussion of same above for FIG. 3 is relevant to process of FIG. 4).

When the folder grouping change event is generated and detected at step 407, the electronic device proceeds to step 409 and updates a folder grouping type index (i). For example, the electronic device increases the folder grouping type index by 1 (i++).

The electronic device proceeds to step 411 and compares the folder grouping type index (i) with the total number (Ngroup) of folder grouping types. Here, the folder grouping type index indicates a folder grouping type index updated in step 409.

When the folder grouping type index (i) is less than or equal to the total number (Ngroup) of folder grouping types (i ≤ Ngroup), the electronic device recognizes that all changeable folder grouping types have not yet been displayed in the current sequence. Accordingly, the electronic device proceeds to step 413 and verifies an ith folder grouping type.

The electronic device proceeds to step 415 and changes a grouping type of application program folders according to the ith folder grouping type. For example, when the ith folder grouping type is a type for grouping application program folders based on usage dates of application programs, the electronic device changes the usage date based screen as shown in FIG. 2B to a screen of a different type of grouped folders.

On the other hand, when the folder grouping type index (i) is greater than the total number (Ngroup) of folder grouping types (i > Ngroup), the electronic device recognizes that all changeable folder grouping types have been displayed in the current sequence. Therefore, the electronic device proceeds to step 417 and initializes the folder grouping type index. For example, the electronic device initializes the folder grouping type index as 1.

The electronic device proceeds to step 413 and verifies the ith folder grouping type. For example, the electronic device verifies a basic folder grouping type.

The electronic device proceeds to step 415 and changes a grouping type of application program folders according to the ith folder grouping type. For example, when a folder grouping type according to category settings of the user is the initial type, as shown in FIG. 2A, the screen display is subsequently changed to preset folders of a different type...

The electronic device proceeds to step 407 and verifies a folder grouping change event is generated.

In one embodiment described above, the electronic device circulates a plurality of folder grouping types in one direction and changes a folder grouping type according to generation of the folder grouping change event.

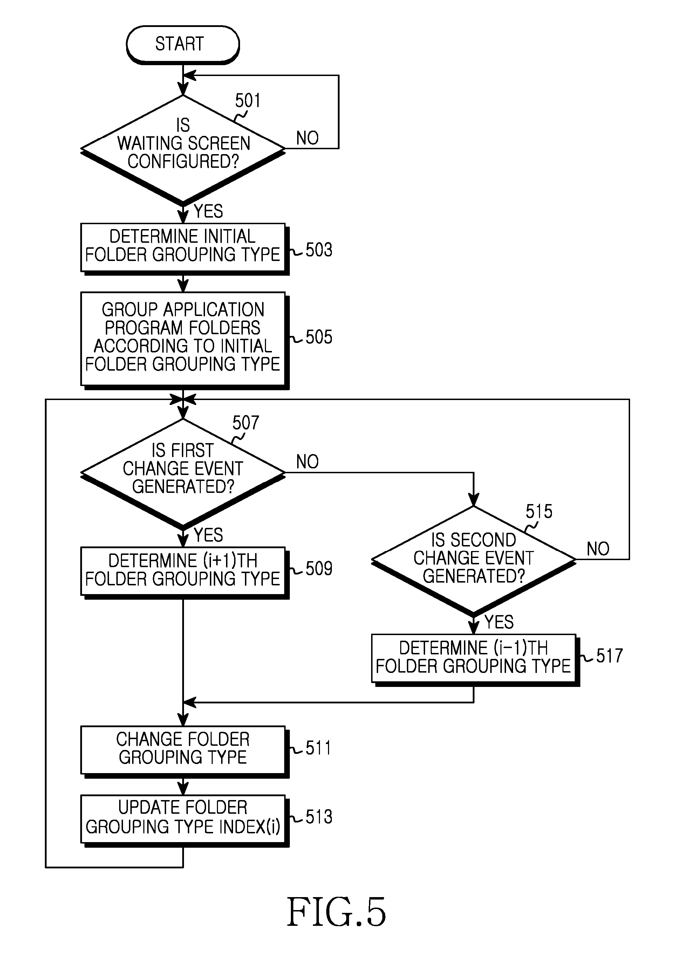

In another embodiment, the electronic device may change, as shown in FIG. 5, a circulation direction of a plurality of folder grouping types according to types of folder grouping change events.

FIG. 5 is a flowchart illustrating a process of changing a grouping type of application program folders in an electronic device according to another embodiment of the present invention.

In this embodiment, steps 501, 503 and 505 are the same as the FIG. 3 steps 301, 303 and 305, respectively (see discussion of FIG. 3 for description).

The electronic device proceeds to step 507 and verifies whether a first change event is generated. For one example, the electronic device verifies whether a first folder grouping change key is pushed. Here, the first folder grouping change key may have been pre-designated as a volume up key (Δ). For another example, the electronic device verifies whether a first folder grouping change icon 207 is selected.

When the first folder grouping change event is generated, the electronic device proceeds to step 509 and verifies an (i+1)th folder grouping type.

The electronic device proceeds to step 511 and changes a grouping type of application program folders according to the (i+1)th folder grouping type. For example, when the ith folder grouping type is a type for grouping application program folders based on usage dates of application programs (FIG. 2B), the electronic device changes the display to that shown in FIG. 2C, i.e., a grouping type of application program folders based on frequency in use of application programs.

The electronic device proceeds to step 513 and updates a folder grouping type index (i). For example, the electronic device increases the folder grouping type index (i) by 1 (i++).

On the other hand, when the first folder grouping change event is not generated in step 507, the electronic device proceeds to step 515 and determines whether a second change event is generated. For one example, the electronic device verifies whether a second folder grouping change key is pushed. Here, the second folder grouping change key may have been designated as a volume down button (∇). As another example, the electronic device detects whether a second folder grouping change icon (not shown) is selected.

When the second folder grouping change event is not generated, the electronic device proceeds to step 507 and determines whether the first change event is generated.

On the other hand, when the second folder grouping change event is generated, the electronic device proceeds to step 517 and verifies an (i-1)th folder grouping type.

The electronic device proceeds to step 511 and changes a grouping type of application program folders according to the (i-1)th folder grouping type. For example, when the ith folder grouping type is a type for grouping application program folders based on usage dates of application programs, the electronic device changes, as shown in FIG. 2A, a grouping type of application program folders based on category setting information of the user.

The electronic device proceeds to step 513 and updates a folder grouping type index (i). For example, the electronic device decreases the folder grouping type index (i) by 1 (i--).

The electronic device proceeds to step 507 and verifies whether the first change event is generated.

In the embodiments of FIGS. 3, 4 and 5 described above, the electronic device continuously determines whether a folder grouping change event is generated. As described, the electronic device continuously determines whether a folder grouping change event is generated in a state where the waiting screen is displayed. When an application program execution screen is displayed on a display unit, the electronic device may continue to execute that application on the entire display screen, and end the determination of folder grouping change events. However, as part of background processing, folder grouping can be updated in accordance with time of day, usage location, frequency of application program use, and the like, thereby updating the application usage database 133. In this manner, the changed grouping information can be immediately presented the next time the waiting screen is displayed.

It should be noted, that an electronic device according to embodiments of the invention preferably provides a user-selectable setting in which folder grouping types are not changed from an initial grouping type, such as that based on categories set by the user. In some circumstances, a user may wish to maintain a constant display of the same folders even when a change event occurs; thus a user setting enabling such constant display is desirably included.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of grouping application program folders in an electronic device, the method comprising:
determining a first folder grouping type;
grouping application programs within at least one first application program folder according to the first folder grouping type, and displaying the at least one folder; and
responsive to detection of a folder type change event, determining a second folder grouping type, grouping application programs within at least one second application program folder according to the second folder grouping type, and displaying the at least one second folder.

2. The method of claim 1, wherein the first and second folder grouping types are each types based on any one of category information of application programs; usage time of application programs, cumulative execution time of application programs, usage frequencies of application programs, and usage places of application programs.

3. The method of claim 2, wherein the grouping of at the application programs within at least one first or second application program folder comprises grouping the application programs based on the usage time according to any one of time, morning/afternoon, a day, a week, and a month.

4. The method of claim 2, wherein the grouping of at the application programs within at least one first or second application program folder comprises grouping the application programs based on a current location of the electronic device.

5. The method of claim 1, wherein the first folder grouping type includes any one of a predetermined folder grouping type and a folder grouping type used when grouping a previous waiting screen.

6. The method of claim 1, wherein the determination of the second folder grouping type comprises:
detecting an input command from a change event generation key; and
determining the second folder grouping type among a plurality of folder grouping types, when the input command is detected;
wherein the change event generation key is a hardware key included in the electronic device.

7. The method of claim 1, wherein the determination of the second folder grouping type comprises:
determining whether a change event generation icon displayed on a display unit is selected; and
determining the second folder grouping type among a plurality of folder grouping types, when it is determined that the change event generation icon is selected.

8. The method of claim 1, wherein the determination of the second folder grouping type comprises:
determining a type of the change event, when the change event is generated; and
increasing an index of the first folder grouping type among a plurality of folder grouping types and determining the second folder grouping type, when a first change event is generated.

9. The method of claim 8, further comprising decreasing an index of the first folder grouping type among the plurality of folder grouping types and determining the second folder grouping type, when a second change event is generated.

10. The method of claim 1, wherein the at least one first application program folder comprises a plurality of application folders which are displayed concurrently on a screen in a predetermined relationship, and the at least one second application program folder comprises a plurality of application folders which are displayed concurrently on a screen in a predetermined relationship.

11. An electronic device arranged to implement a method of one of claims 1 to 10.
